# EUROPÄISCHE PATENTSCHRIFT

(11) **EP 0 696 381 B1**
(45) Veröffentlichungstag und Bekanntmachung des Hinweises auf die Patenterteilung: **29.10.1997**
(21) Anmeldenummer: 94911071.2
(22) Anmeldetag: 23.03.1994
(51) Int. Cl.: H01F 41/10

(54) **VERFAHREN UND VORRICHTUNG ZUM KONTAKTIEREN VON WICKELGÜTERN AN ANSCHLUSSELEMENTEN**
PROCESS AND DEVICE FOR ESTABLISHING CONTACT BETWEEN WOUND WIRES AND TERMINALS
PROCEDE ET DISPOSITIF PERMETTANT DE CONNECTER DES FILS ENROULES AVEC DES ELEMENTS DE RACCORDEMENT

(30) Priorität: 26.04.1993 DE 4313608
(43) Veröffentlichungstag der Anmeldung: 14.02.1996
(73) Patentinhaber: SIEMENS AKTIENGESELLSCHAFT, 80333 München (DE)
(72) Erfinder: MOLL, Helmut, D-91058 Erlangen-Tennenlohe (DE); SCHÖNER, Peter, D-92224 Amberg (DE)
(86) Internationale Anmeldenummer: DE9400331
(87) Internationale Veröffentlichungsnummer: WO9425970

(56) Entgegenhaltungen:
- EP-A- 0 200 014
- GB-A- 2 166 005
- US-A- 4 687 898

## Beschreibung

Die Erfindung bezieht sich auf ein Verfahren zum Kontaktieren von Wickelgütern an Anschlußelementen, insbesondere zum Kontaktieren von mit hochwarmfestem Lack isolierten Drahtenden an Anschlußstiften, wobei das Wickelgut um ein Anschlußelement gewickelt und durch Energiebeaufschlagung mechanisch und elektrisch an wenigstens einer Kontaktierungsstelle mit dem Anschlußelement verbunden wird. Daneben bezieht sich die Erfindung auch auf die zugehörige Vorrichtung zur Durchführung des Verfahrens mit einer Wickeleinrichtung aus Drahtzuführungseinrichtung und einer Wickeldüse und geht aus von US-A-4'687'898.

Zum Kontaktieren von Wicklungsenden von Wickelgütern speziell aus warm- und hochwarmfesten Lackdrähten werden bisher in der Praxis unterschiedlichste Verfahren eingesetzt: Wenn der Lack am Wickelgutende abisoliert ist, lassen sich vorteilhaft Löt- oder Schweißverfahren anwenden. Dabei kommen als Lötverfahren sowohl Weichlöten als auch Hartlöten und als Schweißverfahren beispielsweise Lichtbogenschweißen, Elektronenstrahl(EB)-Schweißen, Widerstandschweißen, Laserschweißen oder auch Ultraschallschweißen in Frage. Da allerdings das Abisolieren des Lackes einen zusätzlichen Arbeitsgang beinhaltet, bemüht man sich im Rahmen einer integrierten Fertigung, eine Kontaktierung ohne vorherige Abisolierung zu erreichen. Dafür kommen bei warmfesten Lackdrähten einerseits ein spezifisches Hochtemperaturweichlöten oder auch die bereits erwähnten Schweißverfahren in Frage.

Wegen der dabei notwendigen Energiebeaufschlagung mit vergleichsweise hohen Intensitäten müssen hierfür üblicherweise metallische Zusatzelemente wie beispielsweise Hülsen, Laschen oder Abdeckplättchen als Hilfsmittel verwendet werden. Speziell für das Ultraschall-Schweißen ist es auch bereits aus der EP-B-0 200 014 bekannt, in einem einzigen Verfahrensschritt einen Draht durch Ultraschallschweißung unter Aufbrechen der Isolationsschicht und Verformung des Querschnittes auf ein Kontaktelement zu schweißen, wobei anschließend unmittelbar der Verbindungsbereich mit einem Tropfen eines schnellhärtenden organischen oder anorganischen Klebemittels umhüllt wird.

Letzteres Verfahren ist insbesondere dann für dünne lackisolierte Drähte geeignet, wenn ein flächenhaftes Anschlußelement zur Verfügung steht und die Energiebeaufschlagung lokalisiert erfolgen kann. Es wird beispielsweise zur Herstellung von elektronischen Bauelementen für die SMD-Technologie angewendet. Weniger geeignet ist das bekannte Verfahren zum Kontaktieren von Wickelgütern bei der automatisierten Herstellung von Spulen, wenn Wickelgut und/oder Anschlußelement schnelle Bewegungen ausführen.

Aus der US-A- 4 687 898 ist ein Verfahren der eingangs genannten Art bekannt, bei welchem die Wicklungsenden um Anschlußstifte gewickelt werden, die in ihrem äußeren Bereich mit Vertiefungen zur partiellen Aufnahme der lackisolierten Drähte versehen sind. Die Verbindung erfolgt dann durch Widerstandsschweißen, wobei die Schweißelektroden die Anschlußstifte direkt kontaktieren und die resultierende Hitze die Isolation der Drähte aufschmilzt und im Bereich der Vertiefungen eine Schweißverbindung von Drähten und Anschlußstiften ermöglicht.

Aus der GB-A- 2 166 005 ist es bekannt, den durch die Wickeldüse eines Wicklungsautomaten hindurchgeführten Draht vor und nach einem Wicklungsvorgang mit Hilfe der Wickeldüse gegen die zugeordneten Anschlußflächen einer Leiterplatte zu drücken. Die Wickeldüse wird dabei über einen Ultraschall-Wandler zu mechanischen Schwingungen angeregt, so daß der Draht unter Aufbrechen seiner Isolationsschicht durch Ultraschallschweißen mit der zugehörigen Anschlußfläche verbunden wird.

Aufgabe der Erfindung ist es, ein Verfahren anzugeben, mit dem Wickelgüter zum automatisierten Wickeln von Spulen aus beispielsweise mit hochwarmfestem Lack isolierten Drähten ohne Stillsetzung des Wickelautomaten an ihren Wicklungsenden kontaktiert werden können. Das automatisierte Fertigungsverfahren soll also nicht für einen Kontaktierungsvorgang, wie Schweißen od. dgl., extra unterbrochen werden, wozu eine geeignete Vorrichtung geschaffen werden muß.

Die Aufgabe ist bei einem Verfahren der eingangs genannten Art erfindungsgemäß dadurch gelöst, daß das Wicklungsende beim Wickeln um das Anschlußelement unter Vorspannung gehalten wird und daß in das System Wickelgut/Anschlußelement mechanische Schwingungen, insbesondere im Ultraschallbereich, derart eingekoppelt werden, daß durch die Reibung zwischen dem unter Vorspannung gehaltenen Wickelgut und einzelnen das Wickelgut berührenden Bereichen des Anschlußelementes Kontaktierungen entstehen.

In vorteilhafter Realisierung der Erfindung können die Schwingungen außerhalb der Kontaktierungsstellen in das Wickelgut und/oder das Anschlußelement eingekoppelt werden. Vorzugsweise wird demzufolge das Wickelgut nur während des Wickelvorganges um das Anschlußelement mit den Schwingungen beaufschlagt. Da sich die Schwingungen über den gespannten Draht fortpflanzen und eine Relativbewegung zwischen Draht und dem Anschlußelement bewirken, kann eine Isolierschicht zumindest teilweise aufgebrochen werden und so eine elektrische Verbindung mit dem Anschlußelement hergestellt werden. Insbesondere eine hochwarmfeste Lackisolierung kann so zur Herstellung einer Kontaktierungsstelle bearbeitet werden.

Bei einer zur Durchführung des Verfahrens geeigneten Vorrichtung ist erfindungsgemäß der Wickeldüse eine Sonotrode zur Übertragung von insbesondere Ultraschallschwingungen auf den Wickeldraht zugeordnet und gegebenenfalls Bestandteil der Wickeldüse. Vorzugsweise führt dabei die Wickeldüse zum Wickeln einer Spule oder dergleichen vorbestimmbare Bahnbewegungen aus. Zum Kontaktieren des Wickelgutes an einem Anschlußelement wird das Wickelgutende um das Element geschlungen, wobei die Sonotrode mit der Wickeldüse deren Bahnbewegung ausführt. Insbesondere kann die Wickeldüse selbst als Sonotrode ausgebildet sein.

Im Rahmen der Erfindung werden Zusatzelemente, wie Abdeckplättchen, Laschen, Hülsen oder dergleichen nicht benötigt. Es kann allerdings vorteilhaft sein, anschließend an das erfindungsgemäße Verfahren das kontaktierte Anschlußelement mit einem mechanischen Schutz zu versehen, wozu Lack, Gießharz oder Weichlot verwendet wird.

Einerseits ist die Erfindung vorteilhaft einsetzbar bei der integrierten Fertigung von Spulen. Dabei erfolgt das Wickeln der Spulen auf Wickelautomaten, bei denen das Wickelgut eine translatorische Bewegung in axialer und radialer Richtung gegenüber dem Anschlußelement ausführt. Jeweils beim Festlegen der Wicklungsenden wird beispielsweise die Wickeldüse mit Ultraschallschwingungen angeregt. Dabei reichen überraschenderweise geringe Verformungen an Kanten oder Profilen des Anschlußelementes aus, um eine hinreichende mechanische und elektrische Verbindung von Draht und Anschlußelement zu erzielen.

Andererseits ist die Erfindung vorteilhaft einsetzbar beim Umwickeln von axialen Bauelementen mit isoliertem Draht, wobei vorzugsweise das Wickelgut translatorisch geführt und das Bauteil mit Anschlußelementen sowohl eine Rotationsbewegung als auch eine Längsbewegung ausführt. Die Ultraschalleinkopplung in den Draht erfolgt dabei speziell in der Kontaktierungsphase an den axialen Anschlüssen.

In beiden Anwendungsfällen kann alternativ zur externen Anregung des Drahtes mit Ultraschallschwingungen auch das Bauelement bzw. das Anschlußelement beaufschlagt werden.

Gegebenenfalls ist es auch möglich, sowohl den Draht als auch das Anschlußelement anzuregen, wobei hier zur Gewährleistung der erforderlichen Relativbewegung zumindest eine Phasenverschiebung der Schwingungen gewährleistet sein muß. Wesentlich bei allen Anwendungsfällen ist, daß erfindungsgemäß eine Fernwirkung von Schwingungen, insbesondere Ultraschallschwingungen, ausgenutzt wird.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen
- Figur 1: das Prinzip des ultraschall-unterstützten Wickelns von lackisolierten Drähten.
- Figur 2: eine zur Verwendung bei Figur 1 ausgebildete Sonotrode und
- Figur 3: eine Einrichtung mit separater Sonotrode.

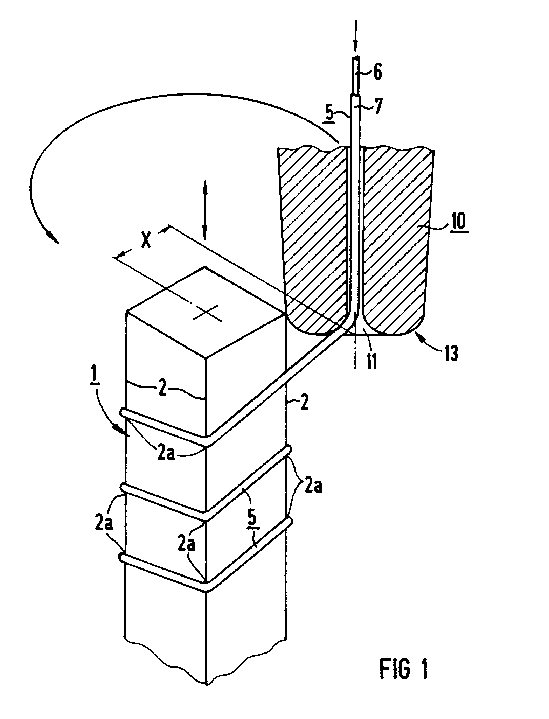

In der Figur 1 ist mit 1 ein Anschlußstift bezeichnet, an dem ein Wickeldraht 5 derart befestigt werden soll, daß eine hinreichende sichere, mechanische und elektrische Verbindung entsteht. Der Anschlußstift 1 besteht aus metallischem Material und hat vorzugsweise einen rechteckigen Querschnitt mit Kanten 2. Er ist beispielsweise mit einem weiteren Anschlußstift Bestandteil einer automatisch auf einen Spulenkern zu wickelnden Spule. Dazu muß der Wickeldraht 5 elektrisch isoliert sein, d.h. er besteht aus einer metallischen Ader 6 mit einer Isolierungshülle 7, die üblicherweise durch eine Lackschicht aus hochwarmfestem Material gebildet ist.

Derartige Spulen werden auf handelsüblichen Wicklungsautomaten mit großer Geschwindigkeit selbsttätig gewickelt, wobei bisher lediglich die Kontaktierung als separater Arbeitsschritt erfolgt, welcher vergleichsweise zeitaufwendig ist. Für die Fertigung der Spulen ist bekannterweise eine Wickeldüse vorhanden, die beim Wickelautomaten Teil eines sogenannten Drahtführers ist, der zum Wickeln der Spule einerseits und zum Befestigten des Wickeldrahtes an den Anschlußelementen vorprogrammierbare Bewegungen ausführen kann.

In Figur 1 ist eine Wickeldüse 10 mit einem zentralen Hohlkanal 11 und abgerundetem Funktionsende 13 angedeutet. Durch den Hohlkanal 11 der Wickeldüse 10 läuft der Wickeldraht 5, beispielsweise ein lackisolierter Kupferdraht, hindurch. Die Wickeldüse 10 und/oder das Bauteil mit dem Anschlußstift 1 kann mit Ultraschall angeregt werden. Insbesondere ist aber der Wickeldüse 10 ein nicht im einzelnen dargestellter Ultraschall-Wandler zugeordnet, der die gesamte Wickeldüse 10 in Richtung des Doppelpfeils mit Schwingungen vorgegebener Amplitude anregt.

Wenn zwischen Anschlußstift 1 und Wickeldüse 10 einschließlich Sonotrode ein Abstand x als Funktionsmaß vorhanden ist und der Wickeldraht 5 unter Vorspannung steht, lassen sich über den gespannten Draht 5 Schwingungen übertragen, die stehende Wellen ausbilden. Durch geeignete Dimensionierung kann erreicht werden, daß sich das Amplitudenmaximum an der jeweiligen Kante des als Rechteckstiftes ausgebildeten Anschlußelementes 1 befindet.

Durch die Fernwirkung des Ultraschalls entsteht also eine Relativbewegung zwischen Draht 5 und den einzelnen Kanten 2 des Anschlußstiftes 1. Aufgrund dieser Relativbewegung wird der Lack auf dem Draht 5 an den Berührstelle mit den Kanten 2 aufgebrochen. Es können somit durch Schweißwirkung Kontaktierungen 2a an den Kanten 2 des Anschlußstiftes 1 entstehen.

Versuche haben ergeben, daß an den Kanten 2 des Anschlußstiftes 1 gewisse Verformungen auftreten. Dadurch kommt es zu einer hinreichend sicheren Materialverbindung, die den elektrischen Kontakt realisiert. Gegebenenfalls kann zum weiteren mechanischen Schutz des umwickelten Anschlußstiftes 1 in einem sich anschließenden Arbeitsschritt Lack, Gießharz oder Weichlot aufgebracht werden. Letzteres erfolgt aber, nachdem die eigentliche elektrische Kontaktierung bereits erfolgt ist.

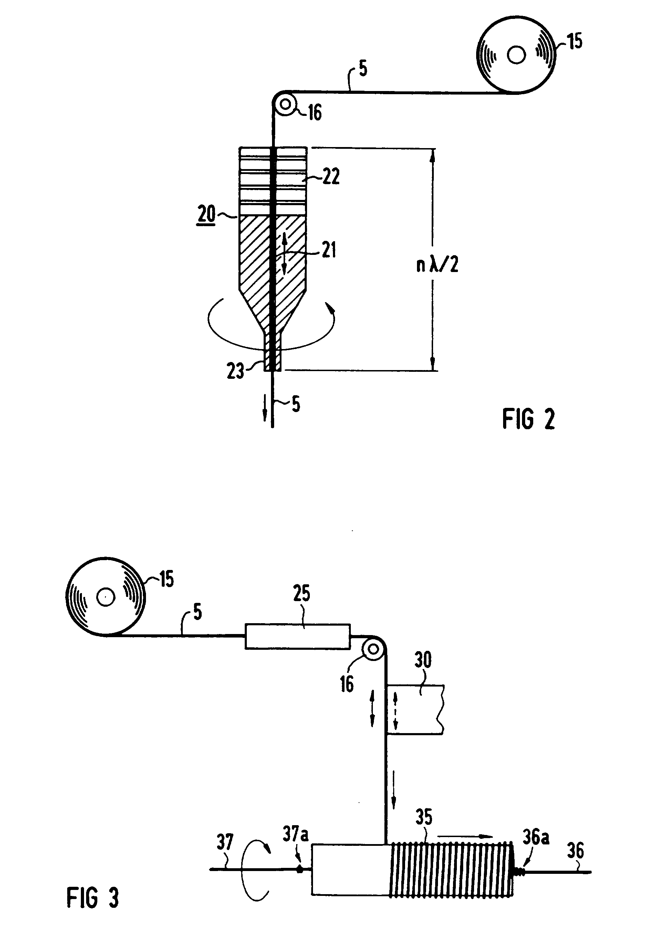

In Figur 2 ist die Wickeldüse gemäß Figur 1 konkretisiert: Von einem Wickeldrahtvorrat 15 läuft der Wickeldraht 5 über eine Walze als Umlenkeinrichtung 16 zentrisch durch eine als Wickeldüse ausgebildete Sonotrode 20. Die Sonotrode hat einen koaxialen Kanal 21 und ist in ihrem rückwärtigen Teil mit einem Schwingungswandler 22 versehen. Die gesamte Wickeldüse 20 einschließlich Schwingungswandler 22 und dem vorderen, als Horn ausgebildeten Teil 23 ist mit ihrer Geometrie als Vielfaches von /2 ausgelegt, so daß sie sich in Resonanz befindet.

Beim Durchlauf des Drahtes 5 durch den Schwingungswandler 22 bzw. den sich daran anschließenden Führungskanal 21 der Wickeldüse kann der Draht 5 mit Längsschwingungen beaufschlagt werden, deren Amplitude durch das Horn 23 vorgegeben ist. Durch die kompakte Bauform kann die als Wickeldüse 20 realisierte Sonotrode gleichermaßen translatorische und rotatorische Bewegungen ausführen, wie es vom Drahtführer des Wickelautomaten bekannt ist.

Ein besonderes Vorteil der in der Figur 2 dargestellten, mit Ultraschall angeregten Wickeldüse 20 besteht darin, daß durch die Schwingungen ein Reinigungseffekt gegen Ablagerungen durch Lackabrieb und Gleitmittel im Düsenkanal 21 erzielt wird.

In der Figur 2 ist der Wickeldraht 5 zentrisch im Düsenkanal 21 geführt. Es sind auch Anordnungen möglich, bei denen der Draht 5 schräg in eine Wickeldüse einläuft. Dadurch kann eine Laufrichtung des Drahtes 5 quer zur Schwingungsrichtung des Ultraschalls vorgegeben werden, was für bestimmte Anwendungen vorteilhaft ist.

In Figur 3 wird der Draht 5 von einem Wickelvorrat 15 durch eine bekannte Wickeldüse 25 geführt und über eine der Wickeldüse 25 zugeordnete Walze 16 zum Bewickeln eines axialen Bauteiles 35 mit Anschlüssen 36 und 37 umgelenkt. In diesem Fall ist eine separate Sonotrode 30 zwischen Wickeldüse 25 und Bauteil 35 vorhanden, an der der Draht 5 zur Einkopplung der Schwingungen vorbeiläuft. Bei einer solchen Anordnung ist es vorteilhaft, den Draht nur translatorisch zu führen, das Bauteil 35 mit den axialen Anschlüssen 36 und 37 selbst dagegen sowohl eine Rotationsbewegung als auch eine Längsbewegung ausführen zu lassen. Während der Umschlingungsphase der Anschlüsse 36 bzw. 37 durch den Draht 5 wird die Sonotrode 30 aktiviert und es erfolgt die Schwingungsübertragung über den Draht 5. Durch die Relativbewegung zwischen Draht 5 und Anschluß 36 bzw. 37 mit vorhandenen Oberflächenrauhigkeiten kommt es somit nach Abrieb der Isolierung zur Ausbildung von Kontaktierungen 36a bzw. 37a.

Bei den beschriebenen Ausführungsbeispielen wird davon ausgegangen, daß die Anschlußelemente als Stifte bzw. Zungen mit rechteckigem Querschnitt gewählt worden sind, wobei die Kanten die Kontaktierungsstellen definieren. Es ist auch möglich, Anschlußelemente anderer Geometrie zu verwenden, bei denen die Oberflächen in geeigneter Weise aufgerauht bzw. profiliert sind, um bestimmte Bereiche als Kontaktierungsstellen auszubilden.

## Patentansprüche

1. Verfahren zum Kontaktieren von Wickelgütern an Anschlußelementen, insbesondere zum Kontaktieren von mit hochwarmfestem Lack isolierten Drähten an Anschlußstiften, wobei das Wickelgut um ein Anschlußelement gewickelt und durch Energiebeaufschlagung mechanisch und elektrisch an wenigstens einer Kontaktierungsstelle mit dem Anschlußelement verbunden wird, **gekennzeichnet** durch folgende Merkmale:
a) Das Wicklungsende wird beim Wickeln um das Anschlußelement unter Vorspannung gehalten,
b) in das System Wickelgut/Anschlußelement werden mechanische Schwingungen, insbesondere im Ultraschallbereich, derart eingekoppelt, daß
c) durch die Reibung zwischen dem unter Vorspannung gehaltenen Wickelgut und einzelnen, das Wickelgut berührenden Bereichen des Anschlußelementes Kontaktierungen entstehen.

2. Verfahren nach Anspruch 1, **dadurch gekennzeichnet**, daß die Schwingungen außerhalb der Kontaktierungsstellen in das Wickelgut und/oder das Anschlußelement eingekoppelt werden.

3. Verfahren nach Anspruch 2, **dadurch gekennzeichnet,** daß das Wickelgut nur während des Wickelvorganges um das Anschlußelement mit den Schwingungen beaufschlagt wird.

4. Verfahren nach Anspruch 1, **dadurch gekennzeichnet,** daß das Wickelgut eine translatorische Bewegung in axialer und radialer Richtung gegenüber dem Anschlußelement ausführt.

5. Verfahren nach Anspruch 1, **dadurch gekennzeichnet,** daß das Wickelgut translatorisch geführt und das Bauteil mit Anschlußelementen sowohl eine Rotationsbewegung als auch Längsbewegung ausführt.

6. Verfahren nach einem der vorhergehenden Ansprüche, **dadurch gekennzeichnet**, daß ein Anschlußelement mit mehreckigem Querschitt zur Ausbildung der einzelnen Kanten als Kontaktierungsstellen verwendet wird.

7. Verfahren nach einem der vorhergehenden Ansprüche, **dadurch gekennzeichnet,** daß ein Anschlußelement mit aufgerauhter bzw. profilierter Oberfläche zur Ausbildung einzelner Bereiche als Kontaktierungsstellen verwendet wird.

8. Verfahren nach Anspruch 1, **dadurch gekennzeichnet**, daß das kontaktierte Anschlußelement mit einem mechanischen Schutz versehen wird.

9. Verfahren nach Anspruch 8, **dadurch gekennzeichnet,** daß als mechanischer Schutz Lack, Gießharz oder Weichlot verwendet wird.

10. Vorrichtung zur Durchführung des Verfahrens nach Anspruch 1 oder einem der Ansprüche 2 bis 10, mit einer Wickeleinrichtung aus Drahtzuführungseinrichtung und einer Wickeldüse (10), **dadurch gekennzeichnet,** daß der Wickeldüse (10, 20, 25) eine Sonotrode (22, 30) zur Übertragung von mechanischen Schwingungen, insbesondere Ultraschall-Schwingungen, auf das Wickelgut (5) und/oder Anschlußelement (1) zugeordnet ist.

11. Vorrichtung nach Anspruch 12 oder 13, **dadurch gekennzeichnet,** daß das Funktionsende (13) der Wickeldüse (10) abgerundet ist und ein beliebiges Auslaufen des Wickelgutes (5) zuläßt.

12. Vorrichtung nach Anspruch 10, wobei die Wickeldüse (10) zum Wickeln einer Spule od. dgl. vorbestimmbare Bahnbewegungen ausführt und zum Kontaktieren des Wickelgutes (5) an einem Anschlußelement (1) das Wickelgutende um das Element (1) schlingt, **dadurch gekennzeichnet,** daß die Sonotrode (22) mit der Wickeldüse (20) mechanisch verbunden ist und gemeinsam die Führung (21) für das Wickelgut (5) bildet.

13. Vorrichtung nach Anspruch 12, **dadurch gekennzeichnet,** daß das Wickelgut (5) in der mit der Ultraschall-Sonotrode komplettierten Wickeldüse (10 20) zentrisch geführt wird.

14. Vorrichtung nach Anspruch 12, **dadurch gekennzeichnet,** daß das Wickelgut (5) in der mit der Ultraschall-Sonotrode komplettierten Wickeldüse (10) schräg unter vorgegebenem Winkel ein- bzw. ausläuft.

15. Vorrichtung nach Anspruch 10, **dadurch gekennzeichnet,** daß die Sonotrode (30) starr zwischen Wickeldüse (25) und Bauteil (35) mit Anschlußelementen (36, 37) angeordnet ist und daß das Wickelgut (5) an der Sonotrode (30) zur Schwingungsbeaufschlagung berührend vorbeiläuft.

## Claims

1. Method for connecting winding materials at terminal elements, in particular for connecting wires insulated with highly heat-resistant lacquer, to terminal pins, the winding material being wound around a terminal element and connected mechanically and electrically to the terminal element at at least one connection point by the application of energy, characterized by the following features:
a) during the winding around the terminal element, the winding end is held under pretension,
b) mechanical vibrations, in particular in the ultrasonic range, are coupled into the winding material/terminal element system in such a way that,
c) connections are formed by the friction between the winding material held under pretension and individual regions of the terminal element which touch the winding material.

2. Method according to Claim 1, characterized in that the vibrations are coupled into the winding material and/or the terminal element outside the connection points.

3. Method according to Claim 2, characterized in that the vibrations are applied to the winding material only during the operation winding around the terminal element.

4. Method according to Claim 1, characterized in that the winding material performs a translational movement in the axial and the radial direction with respect to the terminal element.

5. Method according to Claim 1, characterized in that the winding material is conveyed translationally and the component having terminal elements performs both a rotational movement and a longitudinal movement.

6. Method according to any of the preceding claims, characterized in that a terminal element having polygonal cross section is used to form the individual edges as connection points.

7. Method according to any of the preceding claims, characterized in that a terminal element having a roughened or profiled surface is used to form individual regions as connection points.

8. Method according to Claim 1, characterized in that the connected terminal element is provided with a mechanical protection.

9. Method according to Claim 8, characterized in that lacquer, casting resin or soft solder is used as mechanical protection.

10. Device for carrying out the method according to Claim 1 or one of Claims 2 to 10, using a winding device comprising a wire-feed device and a winding nozzle (10), characterized in that an ultrasonic horn (22, 30) is assigned to the winding nozzle (10, 20, 25) for the transmission of mechanical vibrations, in particular ultrasonic vibrations, to the winding material (5) and/or terminal element (1).

11. Device according to Claim 12 or 13, characterized in that the functional end (13) of the winding nozzle (10) is rounded and permits any desired run-out of the winding material (5).

12. Device according to Claim 10, in which the winding nozzle (10) for winding a coil or the like performs predeterminable path movements and wraps the winding material end around the element (1) to connect the winding material (5) to a terminal element (1), characterized in that the ultrasonic horn (22) is mechanically connected to the winding nozzle (20) and jointly forms the guide (21) for the winding material (5).

13. Device according to Claim 12, characterized in that the winding material (5) is conveyed centrally in the winding nozzle (10, 20), which is fitted with the ultrasonic horn.

14. Device according to Claim 12, characterized in that the winding material (5) enters or leaves the winding nozzle (10), which is fitted with the ultrasonic horn, obliquely at a specified angle.

15. Device according to Claim 10, characterized in that the ultrasonic horn (30) is arranged rigidly between winding nozzle (25) and component (35) having terminal elements (36, 37), and in that the winding material (5) runs contiguously past the ultrasonic horn (30) for the application of vibrations.

## Revendications

1. Procédé permettant de connecter des fils à enrouler avec des éléments de raccordement, permettant notamment de connecter des fils isolés par un vernis à haute résistance à chaud avec des broches de raccordement, le fil à enrouler étant enroulé autour d'un élément de raccordement et étant relié mécaniquement et électriquement à l'élément de raccordement, en au moins un point de connexion, par apport d'énergie, caractérisé par les caractéristiques suivantes :
a) l'extrémité d'enroulement est maintenue en prétension lors du bobinage autour de l'élément de raccordement,
b) des oscillations mécaniques, appartenant notamment au domaine des ultrasons, sont induites dans le système fil à enrouler/élément de raccordement, de manière à ce que
c) des connexions soient formées sous l'effet du frottement entre le fil à enrouler maintenu en prétension et des zones individuelles de l'élément de raccordement en contact avec le fil à enrouler.

2. Procédé selon la revendication 1, caractérisé en ce que les oscillations sont induites dans le fil à enrouler et/ou l'élément de raccordement, en dehors des points de connexion.

3. Procédé selon la revendication 2, caractérisé en ce que le fil à enrouler est soumis à l'influence des oscillations seulement pendant le processus de bobinage autour de l'élément de raccordement.

4. Procédé selon la revendication 1, caractérisé en ce que le fil à enrouler effectue un mouvement de translation dans les directions axiale et radiale par rapport à l'élément de raccordement.

5. Procédé selon la revendication 1, caractérisé en ce que le fil à enrouler est guidé de façon à effectuer une translation et le composant pourvu d'éléments de raccordement exécute aussi bien un mouvement de rotation qu'un mouvement longitudinal.

6. Procédé selon l'une des revendications précédentes, caractérisé en ce qu'un élément de raccordement ayant une section transversale polygonale est utilisé pour exécuter les arêtes individuelles en tant que points de connexion.

7. Procédé selon l'une des revendications précédentes, caractérisé en ce qu'un élément de raccordement ayant une surface rendue rugueuse resp. profilée est utilisé pour exécuter des zones isolées en tant que points de connexion.

8. Procédé selon la revendication 1, caractérisé en ce que l'élément de raccordement connecté est pourvu d'une protection mécanique.

9. Procédé selon la revendication 8, caractérisé en ce qu'on utilise, en tant que protection mécanique, du vernis, de la résine moulée ou du métal d'apport de brasage tendre.

10. Dispositif permettant d'exécuter le procédé selon la revendication 1 ou une des revendications 2 à 10, comprenant un dispositif de bobinage formé par un dispositif d'alimentation de fil et par une filière de bobinage (10), caractérisé en ce qu'une sonotrode (22, 30) servant à transmettre des oscillations mécaniques, notamment des oscillations ultrasonores, au fil à enrouler (5) et/ou à l'élément de raccordement (1) est associée à la filière de bobinage (10, 20, 25).

11. Dispositif selon la revendication 12 ou 13, caractérisé en ce que l'extrémité fonctionnelle (13) de la filière de bobinage (10) est arrondie et permet au fil à enrouler (5) de sortir de n'importe quelle manière.

12. Dispositif selon la revendication 10, dans lequel la filière de bobinage (10) servant au bobinage d'une bobine ou élément similaire effectue des mouvements sur une trajectoire pouvant être prédéterminée et l'extrémité du fil à enrouler s'enroule autour de l'élément (1) pour connecter le fil à enrouler (5) avec un élément de raccordement (1), caractérisé en ce que la sonotrode (22) est reliée mécaniquement à la filière de bobinage (20) et forme, avec celle-ci, le guide (21) pour le fil à enrouler (5).

13. Dispositif selon la revendication 12, caractérisé en ce que le fil à enrouler (5) est guidé de manière centrale dans la filière de bobinage (10, 20) complétée par la sonotrode à ultrason.

14. Dispositif selon la revendication 12, caractérisé en ce que le fil à enrouler (5) entre resp. sort en biais, suivant un angle défini, dans resp. de la filière de bobinage (10) complétée par la sonotrode à ultrason.

15. Dispositif selon la revendication 10, caractérisé en ce que la sonotrode (30) est située de manière fixe entre la filière de bobinage (25) et le composant (35) pourvu des éléments de raccordement (36, 37) et en ce que le fil à enrouler (5) passe devant la sonotrode (30) en la touchant afin d'être soumis à l'influence des oscillations.
